# EUROPEAN PATENT APPLICATION

(11) **EP 2 933 537 A1**
(43) Date of publication of application: **21.10.2015**
(21) Application number: 15250006.2
(22) Date of filing: 16.04.2015
(51) Int. Cl.: F16K 17/16

(54) **IMPROVEMENTS IN OR RELATING TO BURST DISCS**

(30) Priority: 16.04.2014 GB 201406902; 15.10.2014 GB 201418263
(71) Applicant: Benoil Services Limited, Newbury RG20 9UJ (GB)
(72) Inventor: Smets, Oliver Timothy Charles, Newbury, Berkshire RG20 9PR (GB)
(74) Representative: Humphrey-Evans, Edward John

(57) **Abstract**

The invention relates to pressure relief devices, of the type commonly referred to as burst discs which are designed to rupture reliably at a predetermined pressure differential. In particular, the present invention relates to burst disc assemblies for, inter alia, process control in a range of industries where reverse pressures are prevalent. This invention also relates to an assembly comprising a burst disc, and a method of manufacture of a burst disc.

## Description

### FIELD OF INVENTION

The Invention relates to pressure relief devices, of the type commonly referred to as burst discs which are designed to rupture reliably at a predetermined pressure differential. In particular, the present invention relates to burst discs for, inter alia, process control in a range of industries where reverse pressures are prevale nt.

### BACKGROUND TO THE INVENTION

There is a variety of pressure relieving devices for containing fluids under pressure until a predetermined pressure level has been achieved. One common type of pressure relieving device is a burst disc assembly, which assembly is provided with a disc that bursts or ruptures at a predetermined pressure. Burst discs, also known as bursting discs, rupture discs and more generically as pressure relief systems, are operable to protect plant, pipework or vessels from dangerous levels of over-pressurisation or vacuum. When the pressure at one side of the disc rises above a predetermined burst level, the disc ruptures thereby releasing pressure from the system. Normal usage means protecting equipment against a rising internal pressure which could damage it if not released. They may alternatively be specified in the reverse situation, to protect against the collapse of equipment subjected to external pressure.

A common method of mounting such a disc has been by insertion of the disc between flanges, such as standard ANSI (American National Standards Institute) pipe flanges. With the aid of a precision base and hold-down flanges a disc is sandwiched between opposed flanges to ensure proper seating. For high pressure applications, other forms of mounting are typically employed, such as by welding, which can be conveniently be performed by the use of electron beam (EB), laser beam or Tungsten Inert Gas (TIG) systems. Burst discs are in widespread commercial use to protect operations, for example In the chemical, pharmaceutical and food industries or other process plants, on pipelines, In aeroplanes, nuclear plant, military equipment and subsea equipment to protect against a build-up of pressure or a surge pressure which would otherwise damage the equipment so protected. There is a very wide spectrum of usage in many applications over many years, and numerous varied forms of disc satisfy the numerous specific requirements. All normally give proper protection to the equipment to which they are fitted. Discs are not necessarily activated, but inspected routinely and may be changed on schedule.

Discs in oilfield tubing, tool, or similar applications are mounted in two ways. The first is a side-wall type of application giving a radial discharge of fluids and relief of pressure. The second is an in-line (or through bore) application, when the disc bridges the tubing, thus giving an axial discharge with respect to the tubing and tool. Notwithstanding this, in certain industries, discs are commonly placed in the side-walls of tubing. The size of disc is then limited by the size (outside diameter) of the tubing and its wall thickness. However, the use of burst discs is not restricted to the placement of such discs within tubing as such. There are many side-wall discs used; they tend to be used in protective mode. For example, many electric submersible down-hole pumps are protected by a disc because if there is a blockage the pressure in the pump may rise and it may seize; retrieving the situation may then be difficult and costly; whereas if circulation is maintained, by the triggering of a burst disc, the pump is much less likely to seize and may be relatively easily retrieved. By contrast, in cementing operations, a burst disc may be used to control the discharge of cement because the operator can trigger the burst by pumping the pressure up to the known specified value. There are many other operations incorporating burst discs which are familiar to those operating In the oil & gas business. Those skilled in the art of tool design have however used discs in a wide variety of tools and in different ways, with certain tools comprising both side-wall and in-line discs.

The situation of being subject to the possibility of either or both growing internal and external pressure is not common in most applications, but is a particular hazard of oil well operations. It is much more difficult to allow for. Attempts have been made to support discs such that the effects of fluctuations are minimised, but with limited success. It is also known to create a disc which operates at different pressures in the two different directions, which has application for a limited range of services when pressure change is not unduly repeating.

A known problem for a burst disc arises from fluctuating pressures and particularly from fluctuating pressures upon each side of a disc. For example, this may easily arise in oilfield practice from natural variations in well pressures, zonal variations in different strata, or from operations in the well such as the pulsations due to some forms of drilling or work practices. Whilst attempts are frequently made to control and minimise such fluctuations, the fluctuations remain inherent in the nature of normal oilfield behaviour and practice.

The effects of fluctuating pressures fall essentially into two categories. In a first category, a disc is subject to a variation of pressure loading in a single direction. Whilst this may cause problems, care is required in choosing a suitable disc for such conditions. A disc is typically selected such that it has a stronger rating than preferred, which is acceptable subject to the remainder of the system being capable of accepting such higher pressure, but it can usually be achieved. In a second category, a disc is subject to a change in direction of the sum of the forces, from one side of the disc to the second side of the disc; i.e. the circumstances cause some degree of pressure reversal. Those skilled in the art will be aware that this is a particularly intractable problem to which there has heretofore been no very satisfactory answer.

It Is known that a reverse pressure on some types of disc does not have to be very substantial for the disc to start inverting. For example, a disc having a non-balanced actuation profile, which is rated to 5000psi in a first direction may start to invert if it sees as little as 200psi in a second, reverse direction. Such inversion, particularly if repeated often, weakens a disc such that it will burst prematurely at a pressure lower than its rated pressure, meaning that it will fail in its intended mode of operation. The exact mechanism, whether it arises from stretching, hardening (to a degree) or otherwise is not material; what is of concern is that the failure rating of the burst disc has been changed and is unknown. Whether for safety reasons or for system control reasons, the change in failure rating is not acceptable.

The evidence from past disc failures suggests that pressure reversal, even when not originally considered to be likely In a particular environment by those performing a particular function with a burst disc assembly, has in fact been a material factor in the cause of failure.

US4085764 relates to a dual rupture disk apparatus for protecting a gas pressure system from over-pressure, comprising similarly directed bulged burst discs, each disc comprising a skirt depending in the direction of one face of the disc to enable simple placement within a tube as the apparatus Is assembled. Gaskets are provided for sealing and the arrangement is a composite bolted together arrangement, making it totally unsuitable for anything other than inline arrangements and is susceptible to improperly tightened fastening and liable to loosen, especially in fixtures subject to high levels of vibration and mechanical stress and therefore cannot be considered to be reliable for many industrial applications, although the skirt enables accurate placement upon fitment. US2661121 and US2895492 provide similarly bolted together burst disc devices, where a second disc is employed in the event of premature failure of first disc. These systems cannot be placed in any form of sidewall applications.

### OBJECT OF THE INVENTION

The present invention seeks to provide an improved burst disc assembly- The present invention seeks to provide a solution to the problems addressed above.

### STATEMENT OF THE INVENTION

According to the present invention there Is provided a unitary burst disc device, said device comprising a body having a flow passage, wherein the flow passage is occluded by first and second spaced apart disc foils, whereby in use, a fluid pressure acting on one disc foil of the assembly is not affected by a fluid pressure acting on the other disc of the assembly. Thus each foil Is protected from effects from the opposite side and remains true to bursting at Its pre-set nominal value. This avoids the disadvantage suffered by known systems in the degradation of the burst disc through pressure reversal issues.

By having a unitary construction, through welding for example, it has been found that the disadvantage of prior clamping systems, in particular that of incorrect fastening through the application of an incorrect torque in fastening, is absent; furthermore the simplicity of a single unit or device enables simple replacement, within a flange, using appropriate gasket or sealing materials. Conveniently, the device comprises a generally circularly cylindrical body having an external screwthread about its body, a flange abutment face on one axial face and, conveniently, a bolt-head or socket for a socket drive or a slot for a screwdriver to enable screw fastening to be simply and easily performed. The first foil - the first "burst disc" - can be selected to be a main operating disc - for specific safety or control characteristics - and is chosen, as is known, to meet application specific requirements. The second foil is an identical foil and can provide protection against counter pressures. Accordingly, the present invention provides a burst disc device that overcomes phenomena such as the effect of differing pressures being exerted upon the same disc body by the separate fluids each side of the unitary disc body. These phenomena have caused a burst disc to fail before reaching design burst pressures and have sometimes been considered as device quality failings.

The unitary burst disc device consists of two foils spaced apart, with the distance between the two foils being set such that in normal operation, the discs do not interfere with each other. For example, where there are domed foils, the domed foils are prevented from being in touching contact, when subject to elastic movement below bursting pressure. The inner disc foil is the main operating disc and is chosen, as at present, to meet the job pressure requirements. The discs may be flat or domed. It is a preferred version of the invention that each disc is domed, the inner one towards the outside or annulus, the outer protective one inwards. The spacing apart of the disc foils prevents interaction of the discs, especially when domed. When the disc foils are selected such that they are domed and concave to the respective pressures, the attributes of the reverse flow pressures are typically much reduced and this can be used to advantage.

It will be appreciated, that an assembly in accordance with the present invention will need to be manufactured for specific conditions anticipated in use, for example, the pipe size and the application. Equally the present invention provides safety in isolating burst disc devices with applications in other areas where pressures either side of a burst disc device are known to exist.

Conveniently, the unitary body is formed from three annular elements, with a central element irremovably fastened with respect to the first and second end elements to form a single unit, with the first and second disc foils being irremovably fastened either side of the central annular element. By having the annular element and discs integrally formed, the axial dimensions are minimized. Preferably, the body elements are fastened by welding with the central element welded between first and second end elements bodies to form a single unit, with the first and second discs being welded either side of the central annular element. The skilled man will appreciate that the welding operation needs to be performed with great care, to ensure uniformity of weld. Applicants have determined that by moving the elements as one before a heat source, such as a laser beam, electron beam, a high temperature flame such as one provided by a Tungsten Inert Gas (TIG) welding system, uniform welds of high quality can be provided. The present invention, therefore, In one aspect, provides a simplified design by welding closely spaced apart discs, which in tests has proven its effectiveness in the field. The present invention is distinct in its simplicity as well as effectiveness.

The body material is selected from a corrosion resistant material such as stainless steel, a nickel-based alloy, titanium, Monel or aluminium; the disc foil can be selected from an appropriate matching material, nickel-based material or from one of stainless steel, aluminium, titanium or Monel, for example.

It should be observed that the present invention is quite distinct from the use of dual (or multiple) disc foils closely adjacent to one another, which is a practice in being for many years, if not commonly so. Such an arrangement does not at all address the problem of fluctuations of reversing pressures, and indeed it is probable, from some experimental work, that such disc assemblies fare worse than standard discs in these circumstances.

### BRIEF DESCRIPTION OF THE FIGURES

For a better understanding of the present Invention, reference will now be made, by way of example only, to the Figures as shown in the accompanying drawing sheets, wherein:-
Figures 1 & 1a illustrate a first known burst disc in side and plan views;
Figures 1b and 1c shows a known burst disc after bursting;
Figure 2 illustrates a first embodiment of the invention; and,
Figures 3 and 3a show two states of use of an embodiment of a burst disc made in accordance with the invention.

### DETAILED DESCRIPTION OF THE PREFERRED EMBODIMENTS

There will now be described, by way of example only, the best mode contemplated by the inventor for carrying out the present invention. In the following description, numerous specific details are set out in order to provide a complete understanding to the present invention. It will be apparent to those skilled in the art, that the present invention may be put into practice with variations of the specific.

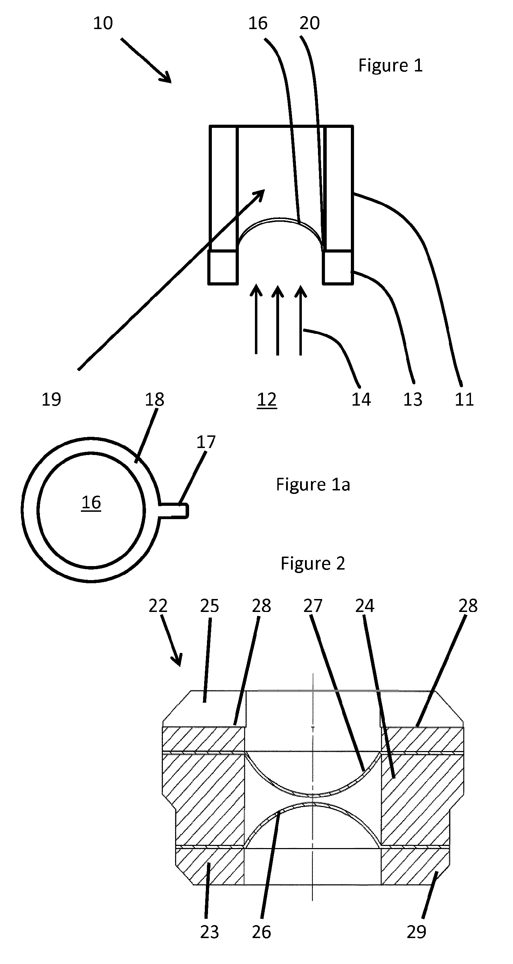

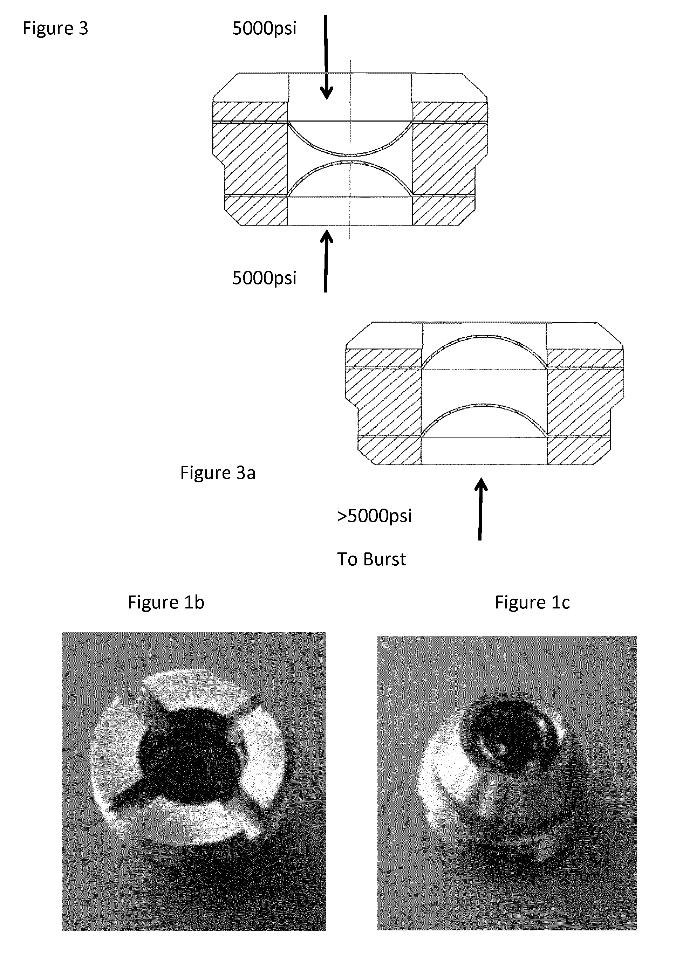

Figure 1 shows a prior burst disc assembly 10 comprising a tubular passageway 12, 19, with a domed disc 16, separating the two parts of the passageway. The domed disc is a burst disc foil and resists a fluid providing a pressure indicated by arrows 14 against a first concave side of the domed disc foil. On the reverse side of the disc, the chamber 18 can be filled with a fluid which applies pressure in an opposite direction to the pressure indicated by arrows 14. Figure 1a shows the burst disc 16 prior to placement between the two flange elements 11 and 13 between which the annular portion 18 is located and retained Figures 1b and 1c show another prior art burst disc which has been subject to a force in excess of the limit such that it has burst. Such burst disc assemblies are manufactured to high tolerance such that the burst pressures are reliably maintained and, typically, burst pressures are accurate to ±2.5 %.

Referring now to Figure 2, there is shown a first embodiment of a burst disc assembly of the invention comprising a body 22 comprising first, second and third body parts each defining a central bore, the second body part determining the distance between the first and second burst discs 25 & 27. The discs are oppositely directed, concave towards the outside. As is known, the burst disc assembly can be fitted by screw thread (not shown); a slot 28 being defined to accept an insertion tool. The chamfered face 29 being shaped to abut against an "O"-ring seal on a corresponding seat when positioned with a device to which the burst disc assembly 22 is attached, such as a tool string. The body parts are typically made from a highly resistant material, such as 316 stainless steel, often referred to as marine grade stainless steel, this material being easily worked, can be welded to many other metals and alloys, yet is corrosion proof and is widely available. The closed cavity defined between the discs is fluid filled; this fluid can be one of air, a mixture of gases, a specific gas, a mixture of liquids, a specific liquid or combinations thereof.

Figure 3a shows how, in use, the invention provides resistance to a pressure of 5000psi against a first burst disc, used for control or safety purposes. In the reverse direction, a pressure of up to 5000psi is also protected against. In contrast to prior discs, the first disc is not affected by any of such reverse pressures. It will be appreciated that, ih the event that there is only one disc, which disc is subjected to frequent variations in pressure then this can lead to premature failure of the disc.

The burst discs can be simply manufactured from metal foils of various types, suitable for the particular types of fluids with which the foils shall come into contact. Equally, they must be compatible with the body metal of the assembly and ideally be easily welded, one with respect to the other. Nickel and nickel alloys are commonly used, especially in oil-wells, particularly alloy 600 (aka Inconel 600), Monel ® 600 and alloy C-276 (Hastelloy ® C-276), Inconel ® 625, Inconel ® 825 and others, although other materials such as stainless steel 316, aluminium, titanium and other alloys may be used. The primary function of such alloys is that of effective survival under high-temperature, high-stress service in a moderately to severely corrosive, and/or erosion-prone environment where more common and less expensive iron-based alloys could fail. Although corrosion resistant to a high degree, such alloys experience degradation due to fabrication techniques and handling.

These metals are typically supplied in foils in a range of thicknesses, 0.001" to 0.010" typically in 0.001" steps for C-276, or in nickel from 0.025" to 0.5". The foils are supplied in such thicknesses as a function of their tensile strength with regard to suitability for purpose and as a minimum thickness such that they can reliably and consistently be manufactured.

The metal bodies of the assembly can be selected from a wide range of suitable materials, provided the metal can weld to the foil. As discussed above stainless steel 316 is a readily available material and is a material that can be readily welded to many different metals and alloys. However, one can only usually choose titanium for the body if the foil is titanium too; likewise, aluminium for aluminium discs. Several different foil materials are employed to make discs, and several different metals can be used to make the bodies. However, many metals are not commonly and readily available in foil form. Although, in principle, any metal available as a foil can be used, not all foils can be welded to all metals without complication which may limit certain specific applications.

Many disc assemblies are provided as simple (non-threaded) discs, for example with a 50mm bore and are used in many applications, such as 150psi pump pressure relief systems, when the disc can be simply clamped between flanges. Larger discs and discs subject to greater pressures need to be more securely fastened to their housings, for example by welding. As is known, for some applications, where sour gas is likely to be present, the discs may need to be protected; gold plating can be used for such circumstances. Electro-polishing or passivation of the metals and alloys can also improve corrosion resistance.

As discussed above, in high pressure applications, welding is employed to create a unitary double disc assembly. Whilst known electron beam (EB), laser beam or Tungsten Inert Gas (TIG) systems have previously been employed for single discs systems, this has not been common. Moreover, there has not previously been perceived a need for double disc systems and there have been previously been believed that satisfactory results would not be realized. Notwithstanding this, Applicants have developed techniques where product has been clamped and moved (for example by rotation) with respect to a welding system, whereby controlled welding has been enabled. By such procedures, high integrity welding has been performed to provide reliably fabricated unitary spaced apart double foil burst discs devices. Indeed, sectional analysis of the welds have shown consistent fabrication results, necessary in safety critical applications. That Is to say previously held beliefs that problems in fabrication arising from warping, distortion, arising from the differential temperatures and the subsequent problems with heat affected zones have been confounded.

It is believed that by performing the welding operation upon a securely clamped burst disc assembly (in intimate contact with respect to each other), conveniently mounted upon a lathe or other rotating machine base before a stationary welding head associated with the specific welding system, the prior concerns have been unfounded. In respect of such high pressure applications, a burst disc device is provided as a completed assembly of a disc and two flanges. Conveniently a chamfer or groove is provided to accommodate a nominated O-ring size (some are metal-metal seals, needing no O-ring).

In relation to oilfield operations, for example, the term tubing is generally used to mean any class of tubing, including casing, production tubing, work-over tubing, drill-pipe, and coil tubing (also known as colled tubing). The types of tubing where burst discs are placed are commonly concerned with production, workover, drill-pipe and, especially with colled tubing. Casing is larger than the other types of tubing; the other types of tubing typically run inside the casing. Coil tubing is smaller than other types of tubing and can be selected to be run inside all the others, usually for work-over purposes, but also sometimes for drilling; the bigger sizes of coil tubing can be used for production too. Coil tubing is unitary, one piece, from above well-head to the bottom of its reach (often 15,000 - 25,000ft); other types of tubing, however, are usually made up in 30ft lengths, threaded together.

Tubing (apart from casing) carries a tool string. The term string is used to denote the tubing and a sequence of one or more, often many (e.g. 10-20) tools all attached end-to-end to each other, often with special-thread connections, and to the lower end of the tubing. Thus a drill string will carry a drilling head attached to drill pipe or coil tubing. Production tubing may carry valves or pumps. Work-over tubing may carry the range of tools necessary to isolate a casing section and carry out remedial work in controlled manner. A tubing string may consist of more than one grade (wall thickness) of tubing, with thicker walled versions at the upper end to take the weight of thinner walled lower sections. This is particularly, and now usually, the case with coiled tubing, when the result is referred to as a tapered string.

Burst discs are intended to facilitate a particular operation. This can be in a positive sense e.g. when conducting a cementing operation, the disc can be used to hold back cement for a specific period and then permit its discharge at a known pressure applied from the surface. Alternatively a burst disc operation can be employed in a precautionary sense, e.g. so that a down-hole pump does not seize up if subjected to excessive pressure either from the well or the column of fluid it is supporting. Equally, the burst disc operation can be used as a positive trigger e.g. to deflate a pressurised packer at the end of an operation, or to equilibrate pressures between the inside of tubing and the annulus between tubing and casing. A burst disc can also operate so as to cause another tool to activate. By choosing discs of different pressure rating, one may have more than one disc-controlled procedure in a string.

Discs are generally mounted in one of two ways, although there are special applications. The first is a side-wall type of application giving a radial discharge of fluids and pressure. The second is an in-line (or through bore) application, when the disc bridges the tubing, thus giving a discharge up or down the tool and tubing. There are many side-wall discs used; they tend to be used In protective mode. Those skilled in the art of tool design have however used discs in a wide variety of tools and In different ways. Thus it is also possible to have both side-wall and in-line discs in a single tool.

The size of disc is limited in the case of side-wall discs by the available wall thickness and the tubing diameter. The smaller the tubing, the smaller the disc diameter and thickness has to be to avoid it standing proud of the outside surface. That is why the most common discs are of 10mm, 8mm and 5mm nominal bore and 10mm thick. For unusual requirements, they can be, and have been, slimmed further. This size limitation also affects available pressures in standard form, but as oilfield pressures typically require values of 2000psi - 10,000psi, through increasingly pressures of 20,000psi are being specified. Notwithstanding the above, common sizes of drill-pipe, work-over and production tubing and their tool-strings are 3.5" to 6.0", but there are many others. Common wall thickness can be from ½" to 1". There are exceptions to both dimensions and in both upward and downward sizing. Casing tubing is much larger and coil tubing is much smaller; neither, at least currently, Is used to carry discs directly. Casing is intended to seal a well from the formation strata, so is unlikely to require a disc. Coil tubing carries and conveys tools which carry discs.

The bigger diameter, bore and wall of large tubes and large tubing tools permit use of bigger discs; typical or standard sizes are ¾" (19mm), 1" (25.4mm) and 1.5" (38.1mm) which enable bigger volume flows through the burst disc, which is often a critical element to avoid pressure build-up even during discharge (which could damage some other aspect of the tool string). These larger discs also tend to be the ones favoured for in-line application. Even bigger discs for yet larger tool applications are known, with common bigger discs having a bore of 3-1/8" (with an outside diameter of 3-7/8"), 4" and 6". Though such big discs are generally for in-line purposes, this is not always the case. When getting up to this size, it is possible to have specially shaped tools with larger areas built to accommodate the disc.

A riser is a very special tubing tool used to connect a subsea oil or gas well to a platform. It has to be particularly tough and strong to withstand battering influences of waves, corrosion of saltwater and air, barnacles and seaweeds attaching to it, chemical cleaning of these, and whatever else it may be subjected to upon installation. Pressure fluctuation affects all discs in all these applications, and, potentially, all might benefit from the control given by the present invention. Large discs have been fitted to such risers as an ultimate form of protection separating platform from well.

Whilst a primary example of use of the present invention has been described in relation to the oilfield operations, it will be appreciated that such a burst disc can be constructed for other industrial applications - refineries, chemical plants - where the required volume discharge rate can demand a large aperture, but the pressures are much lower; that is easier to achieve with large discs. Quite simply, the present invention provides an integral burst disc fabrication that is stable to fluctuations in operating conditions, but is reliably burstable at a known value.

In many oilfield, operations, inappropriate failure of a disc can jeopardize an operation costing anything from say $200,000 to several $million. It is believed that the present invention can provide a simple and focussed solution to this risk. Failures of discs have been attributed to one or more causes, such as work hardening, and stretching through repeated cycling of various high pressures in use. By limiting the forces that act upon a burst disc to only one side of the disc foil, the degradation over time due to isolating one side of the burst disc device can significantly be minimized, increasing reliability of operation of the burst disc device, which is of concern where specified ratings of a disc must be achieved.

Reliability, security and safety are a benefit to all and it is believed that the present invention can provide significant dividends where failures are due to fluctuating pressure differentials. Such fluctuating differentials do not affect the discs of this invention and thus they protect against premature operation or operation at a non-specified pressure.

Unitary discs in accordance with the invention can also be provided conveniently into the walls of pipes where previously such applications were deemed not possible. The unitary double disc can provide devices that can simply be placed with in the walls of tubing which may be only ½" thick, whereas all previous suggestions involving using more than one disc are limited by being far too large for similar purpose. In any event, the invention is not limited to small discs, since a scaling of the wall thickness, to say 1", to accommodate bigger discs, still rules out the use of discs of any known prior art, while the present invention can be used to create discs of appropriate size to meet the technical need.

Whilst the present invention has been discussed in relation to oilfields, as a simple, well-known example, the present invention provides safety in isolating burst disc device with applications in other areas where pressures either side of a burst disc device are known to exist. For example, there are applications within passenger planes, when safety critical devices need to be present, for example being associated with emergency decompression and release of oxygen into cabin areas. Control systems associated with power generating stations also have requirements of process control, with high pressure, high temperature fluids being used to transport thermal energy.

In a still further field, that of commercial cleaning operations, high pressure washers, which operate at pressures of up to 40,000psi can benefit form the safety aspect of the present invention. Trigger systems in the oil industry are also often provided with burst disc control systems, where pressures of operation frequently lie within the range of 20-1000psi. Producers of commercial gases also need to protect their systems and tanks against sudden pressure from warming up. There is a large field of specialised discs in chemical plants, at reduced pressures relative to oil well pressures, but nonetheless important in process control; in case a chemical reaction which gets out of control and generates enough excess pressure in a vessel such as a steel container, then the importance of having reliably operating, non-aging burst discs is significant.

Whilst the present invention has addressed the specific needs of the oil industry the invention can also be utilised in the chemical industry. It is also known that glass discs can be provided with welded metal gaskets as a further alternative.

## Claims

1. A burst disc assembly, said assembly comprising a unitary body having a flow passage, wherein the flow passage is occluded by first and second spaced apart burst disc foils, wherein the unitary body is formed from three annular elements, with a central annular spacer element between first and second annular end elements to form a single unit, with the first and second discs being fixed either side of the central annular spacer element whereby in use, a fluid pressure acting on one disc of the assembly Is not affected by a fluid pressure acting on the other disc of the assembly.

2. A burst disc assembly according to claim 1, wherein body comprises three annular elements, with a central element welded between first and second end elements bodies to form a single unit, with the first and second discs being welded either side of the central annular element.

3. A burst disc assembly according to claim 1 or 2, wherein the body material is selected from a corrosion resistant material selected from stainless steel, nickel and nickel alloys such as Inconel 600, Monel ® 600 and Hastelloy ® C-276), aluminium and titanium.

4. A burst disc assembly according to any one of claims 1 - 3, wherein the burst disc foils selected from a nickel-based metal or alloy.

5. A burst disc assembly according to claim 1 or 2, wherein the burst disc foil is a metal selected from stainless steel, aluminium, and titanium.

6. A burst discs assembly according to any one of claims 1 - 6, wherein the burst disc foil has a thickness in the range 0.001" to 0.030".

7. A burst disc assembly according to any one of claims 1 - 8, wherein the foils are planar.

8. A burst disc assembly according to any one of claims 1 - 7, wherein at least one of the foils is domed.

9. A burst disc assembly according to any one of claims 1 - 8, wherein both of the foils are domed.

10. A burst disc assembly according to claim 9, wherein both of the foils are domed and are oppositely directed.
